# EUROPÄISCHE PATENTSCHRIFT

(11) **EP 1 002 765 B1**
(45) Veröffentlichungstag und Bekanntmachung des Hinweises auf die Patenterteilung: **10.12.2003**
(21) Anmeldenummer: 99120319.1
(22) Anmeldetag: 12.10.1999
(51) Int. Cl.: C02F 1/46

(54) **Vorrichtung und Verfahren zur Behandlung von Wasser gegen Kalkablagerungen**
Device and process for treating water to prevent scaling
Dispositif et procédé de traitement antitartre de l'eau

(30) Priorität: 17.11.1998 DE 19852956
(43) Veröffentlichungstag der Anmeldung: 24.05.2000
(73) Patentinhaber: Judo Wasseraufbereitung GmbH, D-71364 Winnenden (DE)
(72) Erfinder: Söcknick, Ralf, Dr., 70806 Kornwestheim (DE); Neidhardt, Klaus, 75228 Ispringen (DE)
(74) Vertreter: KOHLER SCHMID + PARTNER

(56) Entgegenhaltungen:
- WO-A-96/38384
- FR-A- 2 281 655
- US-A- 4 169 035
- US-A- 4 444 637
- US-A- 4 786 380

## Beschreibung

Die Erfindung betrifft eine Vorrichtung und ein Verfahren zum Behandeln von Wasser bzw. wässrigen Lösungen gegen Kalkablagerungen mittels elektrolytischer Bildung von Kalziumkarbonat-Kristallen, die dann als Impfkristalle den sich bei der Einstellung des Kalk-Kohlensäuregleichgewichts ausfallenden Kalk an sich binden, so daß ein Verkalken von nachfolgenden Installationseinrichtungen weitgehend verhindert wird. Die Vorrichtung zur Durchführung dieses Verfahrens weist einen Zulauf für zu behandelnde Flüssigkeit und einen Auslaß für behandelte Flüssigkeit sowie eine Elektrolyseeinrichtung auf, die zwischen Zulauf und Auslaß angeordnete Elektroden umfaßt, welche auf gegeneinander unterschiedliche elektrische Potentiale gelegt werden können, die aus einer Spannungsquelle abgegriffen werden.

Eine derartige Vorrichtung und ein solches Verfahren sind bekannt aus der DE 41 07 708 C2.

Der erste Schritt dieses Verfahrens, die elektrolytische Fällung von Kalk erfordert mindestens zwei Elektroden, die so mit einer Spannungsquelle verbunden sein müssen, daß zumindest zeitweise die eine als Anode und die andere als Kathode geschaltet ist.

Alle derartigen Verfahren basieren auf der elektrolytischen Spaltung des Wassers, die an der (negativ geladenen) Kathode zur Bildung von OH⁻-Ionen und an der Anode zur Bildung von H⁺-Ionen führt. Die OH⁻-Ionen erhöhen nun den pH-Wert im Kathodenbereich, was zu einer Verschiebung des Kohlensäuregleichgewichts vom Hydrogenkarbonat (HCO₃⁻) hin zum Karbonat (CO₃²⁻) führt. Dieses CO₃²⁻ hat nun zusammen mit den im Wasser gelösten Kalziumionen (Ca 2⁺) ein wesentlich kleineres Löslichkeitsprodukt als das HCO₃⁻, wodurch es zur mehr oder weniger spontanen Ausfällung von Kalziumkarbonat (CaCO₃) kommt.

Eine Vorrichtung zur elektrolytischen Entfernung von Kalk aus Flüssigkeiten wird z. B. in DE 44 04 523 A1 offenbart. Nachteilig ist hierbei die zwangsläufige Verkalkung der Kathode durch dort abgeschiedenes CaCO₃, was naturgemäß zu einem raschen Anstieg des elektrischen Widerstandes zwischen Anode und Kathode führt. Die Kathode muß daher in sehr kurzen Abständen ausgewechselt werden.

Diesem Nachteil sollen die in der DE 195 41 234 A1 und der EP 0 452 597 A1 beschriebenen Vorrichtungen dadurch zu begegnen, daß mit mechanischen Abschabevorrichtungen der auf der Kathode abgeschiedene Kalk kontinuierlich oder diskontinuierlich abgekratzt wird. Die entstandenen Kalkstücke werden abfiltriert bzw. sedimentieren in der Vorrichtung.

Allen bisher beschriebenen Verfahren bzw. Vorrichtungen ist jedoch gemein, daß aufgrund der Größe der gebildeten Kalkteilchen maximal nur soviel Kalk aus dem Wasser entfernt werden kann, wie es stöchiometrisch dem bei der Elektrolyse geflossenen Strom also der Anzahl der transportierten Ladungsträger entspricht.

Die FR 2 552 420 A1 offenbart nun ein Verfahren, das den oben genannten Nachteil vermeiden soll, und zwar durch das Anlegen einer elektrischen Spannung, die zu einem Impulsstrom mit rechteckiger Signalform führt. Hierdurch und unter Umständen auch durch die zusätzliche Verwendung einer die Anode von der Kathode trennenden Membrane soll es zu einer Erhöhung des pH-Wertes nicht nur in der unmittelbaren Umgebung der Kathode kommen (wodurch diese, wie bereits beschrieben, verkalkt), sondern insbesondere innerhalb der wässrigen Lösung. Hierdurch soll es zu einer spontanen Ausfällung kleinster Impfkristalle in der Lösung kommen, an die sich dann der bei der Einstellung des Kalk-Kohlensäuregleichgewichts ausfallende Kalk anlagern kann. Vorteilhaft wäre hierbei, daß sich bei einem kalkabscheidenden Wasser mit einer deutlich unterstöchiometrischen Strommenge die Kalkabscheideneigung rasch verringern ließe. Nicht verhindern läßt sich mit diesem Verfahren allerdings, daß die Kathode nach wie vor einem hohen Verkalkungsrisiko ausgesetzt ist und auch die verwendete Membrane leicht verblockt.

In der eingangs zitierten DE 41 07 708 C2 werden ein Verfahren und eine entsprechende Vorrichtung beschrieben, mit denen die oben genannten Nachteile vermieden werden können.

Dabei wird nach einer Vorbehandlung des Wassers durch Unterdruck (Ausgasung von in Wasser gelöstem CO₂) über zwei umpolbare Elektroden Spannung angelegt. Begünstigt durch eine spezielle noppenförmige Oberflächenstruktur der Elektroden werden zunächst an einer der beiden Elektroden eine Vielzahl von Kalkkristallen erzeugt, die dann beim Umpolen (die bisherige Kathode wird hierdurch ja zur Anode - und umgekehrt) wieder von der Elektrode abgesprengt werden. Gleichzeitig bilden sich an der ehemaligen Anode - die nunmehr zur Kathode geworden ist - wiederum eine Vielzahl von Kalkkristallen. Die abgesprengten Kalkkristalle fungieren im behandelten Wasser als Impfkristalle. Dieses Verfahren hat sich in der Praxis sehr gut bewährt und erfordert nur einen geringen elektrischen Strom. Nachteilig ist lediglich, daß das bekannte Verfahren aufgrund der erforderlichen Kombination zweier Verfahrensschritte (CO₂-Ausgasung und elektrolytische Kalkkristallbildung) nicht an jedes zu behandelnde Wasser angepaßt werden kann. Daher sind Einsatzrichtlinien d.h. also Einsatzbeschränkungen erforderlich.

Die Aufgabe der vorliegenden Erfindung ist daher, die Nachteile der oben genannten Verfahren zu vermeiden, d.h., ein Verfahren und eine Vorrichtung der eingangs genannten Art vorzustellen, mit dem ein Verkalken der Kathode weitgehend verhindert wird, wobei die Anzahl und die Größe der erzeugten Kalkkristalle variierbar sein soll, so daß das System entsprechend an das zu behandelnde Wasser angepaßt werden kann.

Diese Aufgabe wird hinsichtlich der Vorrichtung erfindungsgemäß überraschend einfach dadurch gelöst, daß die Elektroden mindestens eine bürstenförmig ausgebildete Kathode mit länglichen Borsten umfassen, die auf die Anode gerichtet sind. An den Spitzen der Borsten ergeben sich dann relativ hohe lokale elektrische Feldstärken des Elektrolysefeldes. Hierdurch werden bevorzugt an den Spitzen der Borsten Kalkkristalle gebildet bzw. abgeschieden. Überraschenderweise kommt es darüberhinaus aber auch zu einer Impfkristallbildung im dreidimensionalen Raum der Bürste, der von den Borsten gebildet wird. Vorteil dieser Kristallbildung aufgrund der Alkalisierung des Wassers - sozusagen im Kathodeninneren - ist die Kalkfällung in der Lösung, also nicht auf einer Feststoffoberfläche. Dies führt zu sehr kleinen Kalkkristallen, die besonders gut für die erfindungsgemäße Wasserbehandlung geeignet sind.

Dennoch wird naturgemäß immer ein erheblicher Teil des elektrolytisch gefällten Kalkes direkt auf der Kathodenoberfläche ausgefällt. Bei der erfindungsgemäßen Vorrichtung ist daher ein Abreinigungssystem vorgesehen, mit dessen Hilfe die Oberfläche der Borsten in einer Torsions- und/oder Biegebewegung relativ zu auf der Kathode abgeschiedenen Kalkkristallen bewegbar ist.

Durch die Verwendung einer derartigen Kathode wird es ermöglicht, durch ein entsprechendes Tordieren oder Verbiegen der Kathode die auf der Kathodenoberfläche abgeschiedenen Kalkkristalle zum Abplatzen zu bringen. Das Verkalkungsrisiko für die Kathode wird damit auch für Langzeitanwendungen auf das technisch mögliche Minimum herabgesetzt, eine Verblokkung von anderen Einrichtungen wie beispielsweise einer Membrane kann nicht erfolgen. Bei der Behandlung von Wasser mit erhöhtem Kalkgehalt muß die Oberfläche der Kathode ganz einfach in kürzeren Zeitabständen durch entsprechende Bewegung vom Kalk befreit werden, während bei "weicherem" Wasser größere Zeitabstände ausreichen.

Außerdem bilden sich bei der Abreinigung ebenfalls kleine Kristalle, die als Impfkristalle geeignet sind. Die Anzahl und die Größe der erzeugten Kalkkristalle ist einerseits durch den gewählten Elektrolysestrom und die Elektrolysespannung, andererseits aber auch durch die Häufigkeit der Abreinigungsvorgänge der Kathodenoberfläche variierbar. Auf diese Weise läßt sich das erfindungsgemäße Entkalkungssystem optimal an das zu behandelnde Wasser anpassen.

Eine Elektroden-Reinigungsvorrichtung für Wasseraufchlorungs- und Endkeimungsgeräte mit einer mehrarmigen Abstreiferbürste in Form eines rotierenden Rechens mit einer Vielzahl von Borstenbüscheln auf den Bürstenarmen ist an sich bekannt aus der DE 32 03 090 A1.

Bei einer Weiterbildung der oben beschriebenen Ausführungsform kann das Abreinigungssystem eine Schwingungsvorrichtung, insbesondere einen Ultraschallerzeuger umfassen, der eine sehr hochfrequente Schwingung und damit Absprengung von Kalkkristallen von der Oberfläche der Kathode hervorruft. Die Verwendung eines Ultraschall-Vibrators zur Vermeidung von Ablagerungen ist an sich aus der JP 06277668 A bekannt. Die JP 06277668 A beschreibt eine Einrichtung zur Wasserbehandlung, bei der auf der Kathode ein Ultraschall-Vibrator angebracht ist. Durch die damit erzeugten und direkt auf die Kathode geleiteten Ultraschallwellen soll die Kathode in Schwingungen versetzt werden, wodurch ein Adhäsion von Calzium oder Magnesiumverbindungen vermieden werden soll.

Bei einer bevorzugten Weiterbildung der Ausführungsform mit Abreinigungssystemen sind die Borsten der bürstenförmigen Kathode aus einem elastischen, in der zu behandelnden Flüssigkeit beständigen, elektrisch leitfähigen Material. Zwar können die Borsten der bürstenförmigen Kathode prinzipiell auch starr sein. Zum Zwecke der Abreinigung bleibt dann aber praktisch nur die oben beschriebene Schwingungsvorrichtung.

Eine besonders einfache und unaufwendig realisierbare Ausführungsform der erfindungsgemäßen Vorrichtung zeichnet sich dadurch aus, daß mindestens ein Abstreifer vorgesehen ist, der zumindest teilweise in die freien Enden der Borsten eintaucht, und daß eine Relativbewegung zwischen den Borsten und dem Abstreifer möglich ist. Aufgrund ihrer elastischen Eigenschaften können die Borsten leicht tordiert bzw. umgebogen werden, um das gewünschte Absprengen der auf der Kathodenoberfläche erzeugten Kalkkristalle zu bewirken. Auf diese Weise kann mittels der Relativbewegung zwischen Borsten und Abstreifer besonders einfach die zum Absprengen der Kalkkristalle von der Borstenoberfläche erforderliche Biege- bzw. Torsionsbewegung erzeugt werden.

Besonders bevorzugt ist eine Weiterbildung der obigen Ausführungsform, bei der die Kathode als Rundbürste mit i.w. radial von einer Bürstenachse abstehenden Borsten ausgebildet ist. Derartige Rundbürsten aus elektrisch leitfähigem Material lassen sich leicht herstellen oder sind sogar bereits für andere technische Anwendungen bekannt und ohne weiteres als Massenprodukte preisgünstig erhältlich.

Vorteilhafterweise können mehrere derartiger Rundbürsten-Kathoden axial aufeinander folgend längs der Bürstenachse angeordnet sein. Damit wird einerseits eine Variation der axialen Länge der gesamten Anordnung ermöglicht, andererseits können einzelne Bürstenelemente bei etwa auftretenden Beschädigungen leicht ausgetauscht werden.

Besonders bevorzugt ist eine Weiterbildung der oben beschriebenen Ausführungsformen, die sich dadurch auszeichnet, daß mindestens ein Abstreifer vorgesehen ist, der parallel zur Bürstenachse in einem Abstand von dieser angeordnet ist, der kleiner ist als die maximale radiale Ausdehnung der Borsten von der Bürstenachse weg. Beim Umbiegen der Borsten durch den Abstreifer sowie beim nachfolgenden Darüberfahren werden Verzögerungs- und Beschleunigungskräfte auf die Borstenoberfläche überlagert, die die Ablösung der Kalkkristalle von der Borstenoberfläche besonders begünstigen.

Alternativ dazu sind auch Ausführungsformen möglich, bei denen der Abstreifer als Ring ausgebildet ist, der über die Rundbürste gestülpt und entlang der Bürstenachse relativ zur Bürste bewegt werden kann.

Bei einer technisch besonders einfach realisierbaren Weiterbildung ist die als Rundbürste ausgebildete Kathode um die Bürstenachse rotierbar, während der oder die Abstreifer starr angeordnet sind.

Alternativ oder ergänzend dazu können der oder die Abstreifer aber auch um die Bürstenachse rotierbar sein.

Besonders bevorzugt sind Ausführungsformen, bei denen die Borsten aus Edelstahl aufgebaut sind.

Die erfindungsgemäße Vorrichtung kann im Prinzip dergestalt realisiert werden, daß die Kathode und eine oder mehrere Anoden einander gegenüberliegend angeordnet sind.

Bei Ausführungsformen mit ohnehin radialsymetrischem Aufbau der Kathode, beispielsweise bei der oben beschriebenen Rundbürstenausführung, wird es aber in der Regel vorteilhaft sein, eine oder mehrere Anoden in Umfangsrichtung um die Radial abstehenden Borsten der Rundbürsten-Kathode anzuordnen.

Bei einer besonders bevorzugten Weiterbildung ist vorgesehen, daß die Anode(n) zur Bürstenachse in einem Abstand von dieser angeordnet ist (sind), der größer ist als die maximale radiale Ausdehnung der Borsten von der Bürstenachse weg, so daß zwischen der Kathode und der (den) Anode(n) ein Ringspalt offenbleibt. Der Ringspalt dient einerseits der elektrischen Isolation zwischen Kathode und Anode(n), andererseits wird dadurch die Drehbewegung der Rundbürsten-Kathode um die Bürstenachse nicht durch die umgebende Anodenstruktur behindert. Durch diesen Ringspalt fließt zumindest ein Teil, zumeist der größte Teil der zu behandelnden Flüssigkeit, so daß entsprechend viele Kalk-Impfkristalle gebildet und an die abfließende Flüssigkeit abgegeben werden können.

Vorzugsweise sind die Anoden bei der oben beschriebenen erfindungsgemäßen Anordnung aus einem schraubenfederförmig aufgewickelten Draht aufgebaut. Auf diese Weise läßt sich die Anodenstruktur besonders einfach und kostengünstig herstellen.

Besonders bevorzugt sind die Anoden aus platiniertem Titandraht aufgebaut, der einerseits eine hohe Stromleitfähigkeit, andererseits eine sehr gute Dauerbeständigkeit gegen aggressivere Stoffe in der zu behandelnden Flüssigkeit und insbesondere gegen Zersetzung durch Elektrolyse aufweist.

Besonders vorteilhaft ist auch eine Weiterbildung der erfindungsgemäßen Vorrichtung, bei der der Draht auf einen zylindrischen, vorzugsweise porösen Wickelkörper aufgewickelt ist, der gleichzeitig als Abstandshalter zur Kathode dient. Damit wird der Anodenstruktur zum einen ein mechanischer Halt gegeben, zum anderen wird sichergestellt, daß der Elektrolysestrom nur durch die mit Wasser gefüllten Poren des porösen Wickelkörpers fließt und es keinen elektrischen Kurzschluß zwischen Anode(n) und Kathode geben kann.

Die bürstenförmige Kathode kann bei anderen Varianten der Erfindung so aufgebaut sein, daß ihre Borsten flächig verteilt von einem ebenen, beispielsweise plattenförmigen Halter, der die Borsten mit der elektrischen Spannungsquelle verbindet, wegstehen. Für verschiedene Anwendungszwecke kann auch eine Ausführungsform der erfindungsgemäßen Vorrichtung von Vorteil sein, bei der die Kathode als Flachbürste mit untereinander im wesentlichen parallenen Borsten ausgebildet ist, die von einer ebenen Platte ausgehen und auf eine oder mehrere, der Kathode gegenüberliegende Anode(n) ausgerichtet sind.

Zum Zwecke der Abreinigung von auf der Kathodenoberfläche angesammeltem Kalk sieht eine Weiterbildung dieser Ausführungsform vor, daß der Abstreifer stabförmig ausgebildet ist und in Längs- oder Querrichtung relativ zur Bürstenoberfläche bewegt werden kann.

Vorzugsweise sind die Elektroden, insbesondere die Anoden aus einem elektrisch leitfähigen und gegenüber den zu behandelnden Flüssigkeiten sowie gegenüber der Elektrolyse beständigen Material, vorzugsweise aus Graphit oder dem bereits oben erwähnten platinierten Titan aufgebaut.

Die Elektroden, insbesondere die Anoden können aber auch eine mit Metalloxid geschützte Oberfläche aufweisen, die sie gegenüber aggressiven Medien resistent und beständig gegenüber der Elektrolyse macht.

Die Spannungsquelle bei der erfindungsgemäßen Vorrichtung kann je nach Einsatzerfordernissen zur Elektrolyse Gleichstrom und/oder gepulsten Gleichstrom und/oder Wechselstrom erzeugen, wobei eine Einrichtung zur Erzeugung von gepulstem Gleichstrom bevorzugt wird.

Am preisgünstigsten ist eine insbesondere gepulste Gleichspannungsquelle. Die Verwendung von Wechselstrom ermöglicht demgegenüber aber auch eine Abreinigung der bisher oben als "Anoden" beschriebenen Elektrodenstrukturen in der erfindungsgemäßen Vorrichtung, da beim Umpolen der Elektrolysespannung der Anoden- und Kathodenfunktionen bei den Elektroden der Vorrichtung jeweils vertauscht werden.

In der Variante, bei der als Elektrolysestrom ein gepulster Gleichstrom eingesetzt wird, können die an den Elektroden durch die Elektrolyse gebildeten Gasbläschen, die deren elektrischen Widerstand erhöhen, leichter von der Elektrodenoberfläche entfernt werden.

In den Rahmen der vorliegenden Erfindung fällt auch ein Verfahren zum Behandeln von Wasser oder wässrigen Lösungen gegen Kalkablagerungen, bei dem zur Elektrolyse eine bürstenförmig ausgebildete Kathode mit Borsten aus flexiblem Material eingesetzt wird, deren Oberfläche ständig oder in zeitlichen Abständen durch eine Torsions- oder Biegebewegung relativ zu den auf den Kathodenborsten abgeschiedenen Kalkkristallen bewegt wird und so deren Abplatzen bewirkt. Damit läßt sich einerseits die oben beschriebene Verkalkung und daraus resultierende Verblockung der Bürstenkathode dauerhaft verhindern. Andererseits können durch entsprechend häufige Abreinigung der auf den Borsten aufgewachsenen Kalkkristalle diese als Impfkristalle dem zu behandelnden Wasser zudosiert werden.

Besonders bevorzugt ist eine Variante des erfindungsgemäßen Verfahrens, bei der die Verformung der Kathodenoberfläche von Beschleunigungs- und/oder Verzögerungskräften überlagert wird, so daß neben der Ablösung der Kalkkristalle von der Kathodenoberfläche auch eine Zerschlagung von eventuell gebildeten Kristallagglomeraten stattfindet. Diese Verfahrensvariante läßt sich besonders gut mit der oben beschriebenen bürstenförmigen Kathode durchführen.

Vorteilhaft ist schließlich auch eine Verfahrensvariante, bei der die Anzahl und/oder die Größe der erzeugten Kalkkristalle durch entsprechende Einstellung der Elektrolysespannung, des Elektrolysestromes und/oder den zeitlichen Abständen zwischen den Biege- bzw. Torsionsbewegungen an der Kathode variiert wird. Insbesondere kann durch relativ häufige Abreinigungsvorgänge das Kristallwachstum bis zum Ablösen von den Borsten zeitlich begrenzt und so die Größe der erzeugten Impfkristalle gering gehalten werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigen:
- Fig. 1: einen schematischen Horizontalschnitt durch eine Ausführungsform der erfindungsgemäßen Vorrichtung mit Flachbürsten-Kathode;
- Fig. 2a: einen schematischen Horizontalschnitt durch eine Ausführungsform der erfindungsgemäßen Vorrichtung mit Rundbürsten-Kathode und Abstreifern;
- Fig. 2b: einen Vertikalschnitt durch Fig. 2a in Richtung A-A; und
- Fig. 2c: ein Detail aus Fig. 2a.

### Beispiel 1:

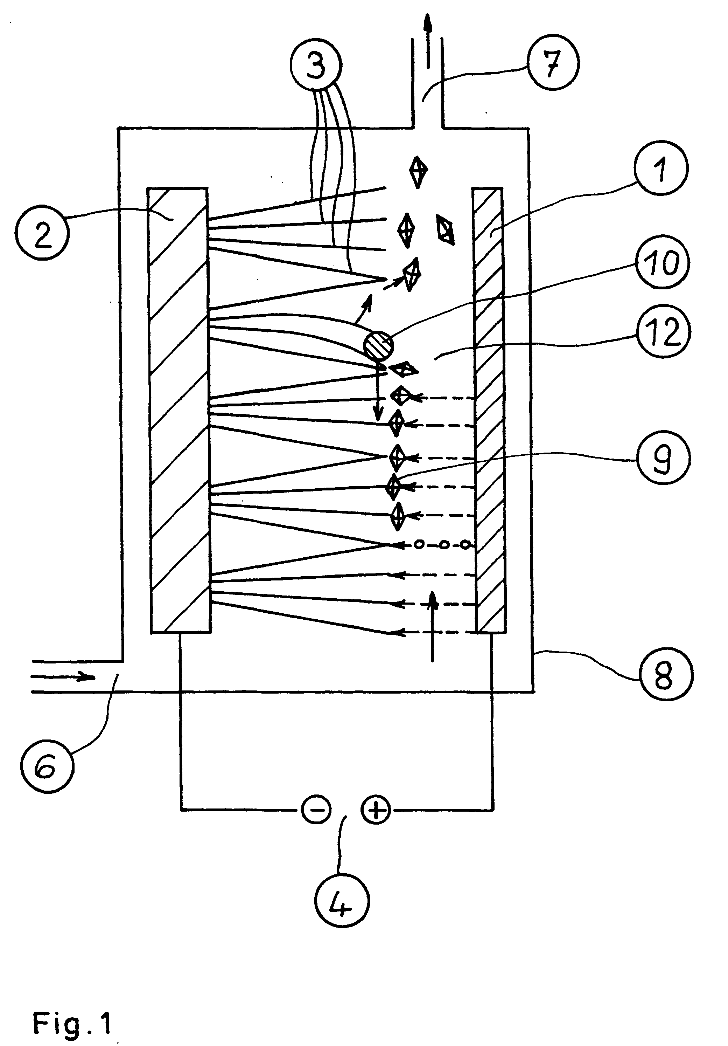

Eine einfache Ausführungsform ist in den Figur 1 dargestellt:

Das zu behandelnde Wasser strömt, wie in Fig. 1 gezeigt, über einen Zulauf 6 in eine Behandlungsvorrichtung 8 ein, während über eine Spannungsquelle 4 an eine Anode 1 ein positives Potential und an eine Kathode 2 ein negatives Potential angelegt wird. Zwischen Anode 1 und Kathode 2 fließt nun ein Elektrolysestrom, der zur elektrolytischen Abscheidung von Kalzium-Karbonat an der Kathode 2 führt. Der Anodenwerkstoff sollte weitgehend beständig gegenüber der zu behandelnden wässrigen Lösung und gegenüber dem Elektrolysevorgang sein. Als Anodenwerkstoff kann z.B. Graphit, platiniertes Titan oder mit Metalloxiden geschützte Oberflächen in Frage kommen.

Die Kathode 2 ist im vorliegenden Beispiel als flache Bürste ausgebildet, die planparallel zur Anode 1 positioniert ist.

Die durch den Elektrolysevorgang an der Kathode 2 abgeschiedenen Kalkkristalle 9, die in Figur 1 schematisch vergrößert dargestellt sind, platzen nun ab, wenn ein Abstreiferstab 10, wie in Figur 1 gezeigt, parallel zur Bürstenoberfläche bewegt wird. Der in die Bürste zumindest teilweise eintauchende Abstreiferstab verbiegt die Borsten 3 der Bürste in seine Bewegungsrichtung soweit, bis die Borsten 3 unter dem Abstreifer 10 hindurchrutschen können. Hierbei kommt es zu einer Relativbewegung zwischen Kalkkristall und Kathodenoberfläche und somit zur Überwindung der Haftkräfte zwischen Kalkkristall und Borstenoberfläche, da die spröden Kristalle der Biege- bzw. Torsionsbewegung und somit der Verformung der Borsten 3 nicht folgen können. Die so abgelösten Kalkkristalle 9 werden nun vom zu behandelnden Wasser mitgerissen und verlassen die Behandlungsvorrichtung 8 über einen Auslaß 7 als Impfkristalle, an die sich dann z. B. in einem nachgeschalteten Boiler weiterer Kalk bei der Einstellung des Kalk-Kohlensäuregleichgewichtes bei höheren Temperaturen, anlagern kann.

Die Größe und Anzahl der gebildeten Kalkkristalle 9 hängt nun neben dem bei der Elektrolyse fließenden Strom von der Bürstenstruktur wie z.B. Borstendicke, Borstenlänge sowie Borstenanzahl je Flächeneinheit und insbesondere von der Häufigkeit bzw. Frequenz der "Abreinigungsvorgänge" also der Ablösevorgänge der gebildeten Kalkkristalle 9 ab.

### Beispiel 2:

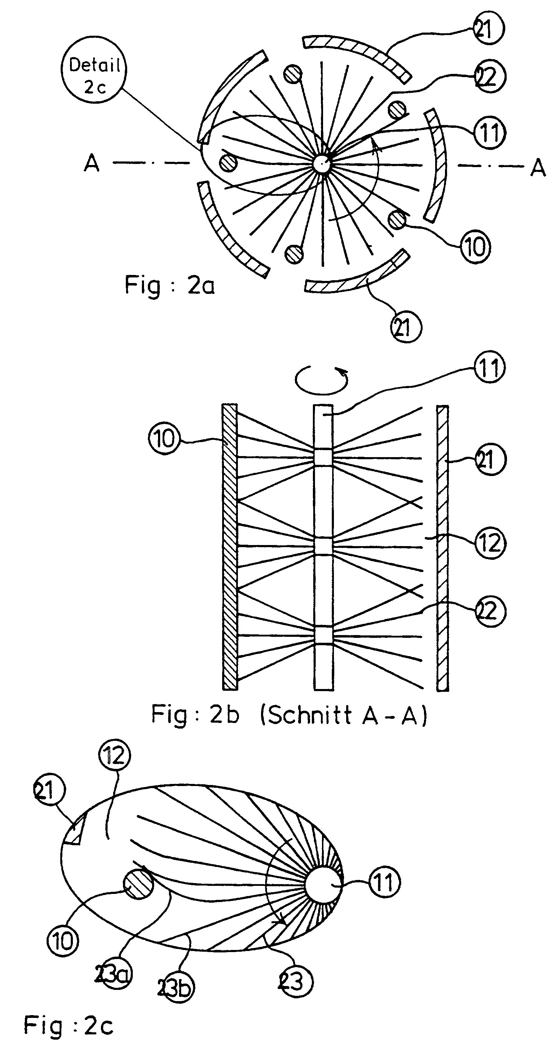

Eine weitere vorteilhafte Ausführungsform ist in den Fign. 2a bis c dargestellt:

Auf die Darstellung der Behandlungsvorrichtung sowie des Zuund Ablaufes wurde hier verzichtet. Die Beschreibung beschränkt sich also auf die in der Behandlungsvorrichtung angeordneten Untervorrichtungen. Die elektrische Spannungsversorgung ist hier ebenfalls nicht dargestellt.

Diese Ausführungsform umfaßt eine bürstenförmige Kathode 22, die um eine Achse 11 gedreht werden kann, sowie eine oder mehrere Anoden 21, die in Umfangsrichtung um die Kathode 22 herum angeordnet sind. So entsteht zumindest partiell ein Ringspalt 12 zwischen Anode(n) 21 und Kathode 22, durch den zumindest ein Teil der zu behandelnden wässrigen Lösung fließt. Liegt nun Spannung an zwischen Anode(n) 21 und Kathode 22, so wird insbesondere an den Spitzen der die Bürste 22 bildenden Borsten 23, 23a, 23b elektrolytisch Kalk abgeschieden. Hier ist die elektrische Felddichte am höchsten und der Abstand zwischen Anode 21 und Kathode 22 am kleinsten.

Um nun die Bürsten-Kathode 22 vor Verkalkung zu schützen und gleichzeitig die erforderlichen Impfkristalle zu generieren, wird die Bürste 22 um ihre Längsachse 11 in Rotation versetzt. Die in die äußere Umfangsfläche der Bürste zumindest teilweise hineinragenden, ortsfesten Abstreifer 10 hindern die Borsten 23a zunächst daran, der Bürstenrotation unmittelbar zu folgen, so daß sie entgegen der Rotationsrichtung zurückgebogen werden und sich verformen müssen. Erst wenn sie am Abstreifer 10 vorbeirutschen, können sie in Drehrichtung nach vorne beschleunigt werden und auf die in ihrer normalen Position befindichen Borsten 23b aufschlagen. Durch diesen Biegevorgang an der Borstenoberfläche sowie die darauf folgende Beschleunigung und Verzögerung werden die an der Borstenspitze gebildeten Kalkkristalle von der Borstenoberfläche abgelöst und können so vom zu behandelnden Wasser als Impfkristalle mitgerissen werden. Durch den Beschleunigungs- und/oder Verzögerungsvorgang kommt es darüberhinaus noch - zumindest teilweise - zu einer Zerschlagung von Kalkkristallagglomeraten, was die Anzahl der an die Flüssigkeit abgegebenen Impfkristalle erhöht.

Besonders bevorzugt sind die Borsten 23, 23a, 23b der Bürsten-Kathode 22 aus Edelstahl ausgeführt, es kommen aber auch andere elastische, im zu behandelnden Wasser beständige und den elektrischen Strom leitende Werkstoffe in Frage.

Als Kathode 22 kommen eine oder mehrere in Richtung der Drehachse 11 angeordnete Bürsten in Frage.

Besonders bevorzugt wird als Anode 21 ein spiral- oder schraubenfederförmig aufgewickelter Draht verwendet, der einen Zylinder bildet mit einem Durchmesser größer als der Bürstendurchmesser, so daß sich der oben beschriebene Ringspalt 12 ausbildet und es keinen elektrischen Kurzschluß zwischen Anode 21 und Kathode 22 geben kann, auch nicht über die Abstreifer 10.

Besonders bevorzugt ist der die Anode 21 bildende Draht auf einen in der Zeichnung nicht dargestellten zylinderförmigen porösen Körper aufgewickelt, der als Abstandshalter zur Kathode 22 dient und einen Stromfluß nur durch die mit Wasser gefüllten Poren zuläßt. Besonders bevorzugt wird hierfür platinierter Titandraht verwendet.

In einer weiteren bevorzugten Ausführungsform wird nicht die Bürste 22 gedreht - sie ist ortsfest - sondern der bzw. die Abstreifer 10 werden um die Achse 11 in Umfangsrichtung der Bürste 22 bewegt, so daß dieselbe Relativbewegung zwischen Bürstenborsten 23, 23a, 23b und Abstreifer 10 entsteht wie oben beschrieben.

### Beispiel 3:

Eine weitere vorteilhafte Ausführungsform besitzt eine Kathode, die mechanisch oder durch Ultraschall ständig oder periodisch in Schwingung versetzt wird und so eine Ablösung der elektrolytisch abgeschiedenen Kalkkristalle bewirkt.

### Beispiel 4:

Der verwendete elektrische Strom kann ein Gleichstrom, ein gepulster Gleichstrom oder aber ein Wechselstrom sein. Letzteres setzt allerdings wegen der erforderlichen elektrolytischen Beständigkeit der jeweiligen Anode entsprechendes Elektrodenmaterial voraus. Besonders günstig bei der Verwendung eines Wechselstromes ist der Einsatz zweier "abreinigbarer" Elektroden (Anode und Kathode). Der Gleichstrom ist am einfachsten zu erzeugen, der gepulste Gleichstrom ermöglicht es, die an Anode und Kathode gebildeten Gasbläschen - die den elektrischen Widerstand erhöhen - leichter zu entfernen. Der Wechselstrom (Stromumkehr) begünstigt den Abplatzvorgang der Kalkkristalle von der Elektrodenoberfläche durch Elektrolysevorgänge (H⁺-Bildung).

### Beispiel 5:

Die Elektrodenanordnung (Anode/Kathode) kann konzentrisch oder auch einander gegenüberliegend sein.

### Beispiel 6:

Die Vorrichtung kann zum Generieren von Impfkristallen (geringfügige Härtereduzierung) benutzt werden, aber auch um eine deutliche Härtereduzierung durch die elektrolytische Ausfällung größerer Kalkmengen zu bewirken.

### Beispiel 7:

Der Elektrolysestrom zwischen den Elektroden der erfindungsgemäßen Vorrichtung und/oder die Torsions- bzw. Biegebewegung der Kathodenoberfläche können mit Hilfe eines Wasserfluß-Sensors in Abhängigkeit von der aktuellen Flußmenge der zu behandelnden Flüssigkeit bzw. dem erwarteten Wasserverbrauch gesteuert werden.

## Patentansprüche

1. Vorrichtung zur Behandlung von Wasser oder wässrigen Lösungen gegen Kalkablagerungen mittels elektrolytischer Bildung von Kalziumkarbonat-Kristallen (9) mit einem Zulauf (6) für zu behandelnde Flüssigkeit und einem Auslaß (7) für behandelte Flüssigkeit sowie mit einer Elektrolyseeinrichtung, die zwischen Zulauf (6) und Auslaß (7) angeordnete Elektroden aufweist, welche auf gegeneinander unterschiedliche elektrische Potentiale gelegt werden können, die aus einer Spannungsquelle (4) abgegriffen werden, wobei die Potentialdifferenz der Elektroden zur elektrolytischen Spaltung von Wasser geeigent ist,
**dadurch gekennzeichnet,**
**daß** die Elektroden mindestens eine bürstenförmig ausgebildete Kathode (2; 22) mit länglichen Borsten (3; 23, 23a, 23b) umfassen, die auf eine oder mehrere Anoden (1; 21) gerichtet sind, und daß ein Abreinigungssystem (10) vorgesehen ist, mit dessen Hilfe die Oberfläche der Borsten (3; 23, 23a, 23b) in einer Torsions und/oder Biegebewegung relativ zu auf der Kathode (2; 22) abgeschiedenen Kalkkristallen (9) bewegbar ist.

2. Vorrichtung nach Anspruch 1, **dadurch gekennzeichnet, daß** das Abreinigungssystem eine Schwingungsvorrichtung umfaßt, mit der die Kathodenborsten (3; 23, 23a, 23b) ständig oder in vorzugsweise periodischen Abständen in Schwingung versetzt werden können, insbesondere einen Ultraschallerzeuger.

3. Vorrichtung nach Anspruch 1 oder 2, **dadurch gekennzeichnet, daß** die Borsten (3; 23, 23a, 23b) der bürstenförmigen Kathode (2; 22) aus einem elastischen, in der zu behandelnden Flüssigkeit beständigen, elektrisch leitfähigen Material sind.

4. Vorrichtung nach Anspruch 3, **dadurch gekennzeichnet, daß** mindestens ein Abstreifer (10) vorgesehen ist, der zumindest teilweise in die freien Enden der Borsten eintaucht, und daß eine Relativbewegung zwischen den Borsten (3; 23, 23a, 23b) und dem Abstreifer (10) möglich ist.

5. Vorrichtung nach einem der vorhergehenden Ansprüche, **dadurch gekennzeichnet, daß** die Kathode (22) als Rundbürste mit i.w. radial von einer Bürstenachse (11) abstehenden Borsten (23, 23a, 23b) ausgebildet ist.

6. Vorrichtung nach Anspruch 5, **dadurch gekennzeichnet, daß** mehrere Kathoden (22) axial aufeinanderfolgend längs der Bürstenachse (11) angeordnet sind.

7. Vorrichtung nach einem der Ansprüche 5 oder 6, **dadurch gekennzeichnet, daß** mindestens ein Abstreifer (10) vorgesehen ist, der parallel zur Bürstenachse (11) in einem Abstand von dieser angeordnet ist, der kleiner ist als die maximale radiale Ausdehnung der Borsten (23, 23a, 23b) von der Bürstenachse (11) weg.

8. Vorrichtung nach einem der Ansprüche 5 bis 7, **dadurch gekennzeichnet, daß** der Abstreifer als Ring ausgebildet ist, der über die Rundbürste gestülpt und entlang der Bürstenachse (11) relativ zur Bürste bewegt werden kann.

9. Vorrichtung nach einem der Ansprüche 5 bis 8, **dadurch gekennzeichnet, daß** eine oder mehrere Anoden (21) in Umfangsrichtung um die radial abstehenden Borsten (23, 23a, 23b) der Rundbürsten-Kathode (22) angeordnet sind.

10. Vorrichtung nach Anspruch 9, **dadurch gekennzeichnet, daß** die Anode(n) (21) zur Bürstenachse (11) in einem Abstand von dieser angeordnet ist (sind), der größer ist als die maximale radiale Ausdehnung der Borsten (23, 23a, 23b) von der Bürstenachse (11) weg, so daß zwischen der Kathode (22) und der (den) Anode(n) (21) ein Ringspalt (12) offenbleibt.

11. Vorrichtung nach Anspruch 10, **dadurch gekennzeichnet, daß** die Anode(n) (21) aus einem schraubenfederförmig aufgewickelten Draht aufgebaut ist (sind).

12. Vorrichtung nach Anspruch 11, **dadurch gekennzeichnet, daß** der Draht auf einen zylindrischen, vorzugsweise porösen Wickelkörper aufgewickelt ist, der gleichzeitig als Abstandshalter zur Kathode (22) dient.

13. Vorrichtung nach einem der Ansprüche 1 bis 4, **dadurch gekennzeichnet, daß** die Kathode (2) als Flachbürste mit untereinander im wesentlichen parallelen Borsten (3) ausgebildet ist, die von einer ebenen Platte ausgehen und auf eine oder mehrere, der Kathode (2) gegenüberliegende Anode(n) (1) ausgerichtet sind.

14. Vorrichtung nach den Ansprüchen 5 und 13, **dadurch gekennzeichnet, daß** der Abstreifer (10) stabförmig ausgebildet ist und in Längs- oder Querrichtung relativ zur Bürstenoberfläche bewegt werden kann.

15. Vorrichtung nach einem der vorhergehenden Ansprüche, **dadurch gekennzeichnet, daß** die Spannungsquelle (4) Gleichstrom, vorzugsweise gepulsten Gleichstrom erzeugen kann.

16. Verfahren zum Behandeln von Wasser oder wässrigen Lösungen gegen Kalkablagerungen mittels elektrolytischer Bildung von Kalziumkarbonat-Kristallen (9), die dann als Impfkristalle den sich bei der Einstellung des Kalk-Kohlensäuregleichgewichtes ausfallenden Kalk an sich binden, so daß ein Verkalken von nachfolgenden Installationseinrichtungen weitgehend verhindert wird, wobei die Elektrolysespannung zur elektrolytischen Spaltung von Wasser geeignet ist,
**dadurch gekennzeichnet,**
**daß** zur Elektrolyse eine bürstenförmig ausgebildete Kathode (2; 22) mit Borsten (3; 23, 23a, 23b) aus flexiblem Material eingesetzt wird, deren Oberfläche ständig oder in zeitlichen Abständen durch eine Torsions- oder Biegebewegung relativ zu den auf der Kathode (2; 22) abgeschiedenen Kalkkristallen (9) bewegt wird und so deren Abplatzen bewirkt.

17. Verfahren nach Anspruch 16, **dadurch gekennzeichnet, daß** die Verformung der Kathodenoberfläche von Beschleunigungs- und/oder Verzögerungskräften überlagert wird, so daß neben der Ablösung der Kalkkristalle (9) von der Kathodenoberfläche auch eine Zerschlagung von eventuell gebildeten Kristallagglomeraten stattfindet.

18. Verfahren nach Anspruch 16 oder 17, **dadurch gekennzeichnet, daß** die Anzahl und/oder die Größe der erzeugten Kalkkristalle (9) durch entsprechende Einstellung der Elektrolysespannung, des Elektrolysestromes und/oder den zeitlichen Abständen zwischen den Biege- bzw. Torsionsbewegungen an der Kathode (2; 22) variiert wird.

## Claims

1. Device for the treatment of water or aqueous solutions against lime deposit by electrolytic formation of calcium carbonate crystals (9), with an inlet (6) for liquid to be treated and an outlet (7) for treated liquid and with an electrolysis means comprising electrodes disposed between inlet (6) and outlet (7), wherein the electrodes can be fed with mutually different electric potentials tapped from a voltage source (4), wherein the potential difference of the electrodes is suited for electrolytic dissociation of water, **characterized in that**
the electrodes comprise at least one brush-shaped cathode (2; 22) with elongated bristles (3; 23, 23a, 23b) which are directed towards one or several anodes (1; 21) and that a cleaning system (10) is provided by means of which the surface of the bristles (3; 23, 23a, 23b) can be moved in a torsional and/or bending motion relative to lime crystals (9) deposited on the cathode (2; 22).

2. Device according to claim 1, **characterized in that** the cleaning system comprises an oscillation device by means of which the cathode bristles (3; 23, 23a, 23b) can be oscillated continuously or in preferably periodical intervals, in particular an ultrasonic generator.

3. Device according to claim 1 or 2, **characterized in that** the bristles (3; 23, 23a, 23b) of the brush-shaped cathode (2; 22) consist of an elastic, electrically conductive material which is resistant to the liquid to be treated.

4. Device according to claim 3, **characterized in that** at least one stripper (10) is provided which is immersed at least partially into the free ends of the bristles, and that a relative motion between the bristles (3; 23, 23a, 23b) and the stripper (10) is possible.

5. Device according to any one of the preceding claims, **characterized in that** the cathode (22) is formed as round brush with bristles (23, 23a, 23b) projecting substantially radially from a bristle axis (11).

6. Device according to claim 5, **characterized in that** several cathodes (22) are disposed in an axial succession along the brush axis (11).

7. Device according to any one of the claims 5 or 6, **characterized in that** at least one stripper (10) is provided which is disposed parallel to and at a separation from the brush axis (11), wherein the stripper (10) is smaller than the maximum radial extension of the bristles (23, 23a, 23b) away from the bristle axis (11).

8. Device according to any one of the claims 5 through 7, **characterized in that** the stripper is formed as a ring which is put on the round brush and can be moved along the brush axis (11) relative to the brush.

9. Device according to any one of the claims 5 through 8, **characterized in that** one or more anodes (21) are disposed in a circumferential direction about the radially projecting bristles (23, 23a, 23b) of the round brush cathode (22).

10. Device according to claim 9, **characterized in that** the anode(s) (21) is/are disposed at a separation relative to the brush axis (11), wherein the separation is larger than the maximum radial extension of the bristles (23, 23a, 23b) away from the bristle axis (11) such that an annular gap (12) remains open between the cathode (22) and the anode(s)(21).

11. Device according to claim 10, **characterized in that** the anode(s) (21) is/are formed from a wire wound like a helical spring.

12. Device according to claim 11, **characterized in that** the wire is wound onto a cylindrical, preferably porous winding body which simultaneously serves as spacer from the cathode (22).

13. Device according to any one of the claims 1 through 4, **characterized in that** the cathode (2) is formed as flat brush with mutually substantially parallel bristles (3) which extend from a flat plate and are directed towards one or several anode(s) (1) which is/are opposite to the cathode (2).

14. Device according to claims 5 and 13, **characterized in that** the stripper (10) is rod-shaped and can be moved in a longitudinal or transverse direction relative to the brush surface.

15. Device according to any one of the preceding claims, **characterized in that** the voltage source (4) can generate direct current, preferably pulsed direct current.

16. Method for the treatment of water or aqueous solutions against lime deposits by electrolytic formation of calcium carbonate crystals (9), which bind the lime that precipitates when the lime carbonic acid equilibrium is established as seed crystals such that calcifying of subsequent installation means is largely prevented, wherein the electrolytic voltage is suited for electrolytic dissociation of water,
**characterized in that**
a brush-shaped cathode (2; 22) with bristles (3; 23, 23a, 23b) made of flexible material is used for electrolysis, wherein the surface of the cathode is moved continuously or in time intervals through a torsional or bending motion relative to the lime crystals (9) precipitated on the cathode (2; 22), thereby effecting the chipping off of the lime crystals (9).

17. Method according to claim 16, **characterized in that** deformation of the cathode surface is superimposed by acceleration and/or deceleration forces such that in addition to the detachment of the lime crystals (9) from the cathode surface, possibly formed crystal agglomerates are also destroyed.

18. Method according to claim 16 or 17, **characterized in that** the number and/or the size of the generated lime crystals (9) is varied through corresponding adjustment of the electrolytic voltage, the electrolytic current and/or the time intervals between the bending or torsional motions on the cathode (2; 22).

## Revendications

1. Dispositif de traitement de l'eau ou de solutions aqueuses contre les dépôts de calcaire par formation électrolytique de cristaux de carbonate de calcium (9) avec une entrée (6) pour le liquide à traiter et une sortie (7) pour le liquide traité ainsi qu'un dispositif d'électrolyse qui comporte des électrodes disposées entre l'entrée (6) et la sortie (7), qui peuvent être amenées à des potentiels électriques différents l'un de l'autre, qui sont prélevés sur une source de tension (4), où la différence de potentiel des électrodes convient pour la décomposition électrolytique de l'eau, **caractérisé en ce que** les électrodes comprennent au moins une cathode en forme de brosse (2 ; 22) avec des poils allongés (3 ; 23, 23a, 23b) qui sont dirigés vers une ou plusieurs anodes (1 ; 21), et **en ce qu'**il est prévu un système de nettoyage (10) à l'aide duquel la surface des poils (3 ; 23, 23a, 23b) peut être soumise à un mouvement de torsion et/ou de flexion par rapport à des cristaux de calcaire (9) déposés sur la cathode (2 ; 22).

2. Dispositif selon la revendication 1, **caractérisé en ce que** le système de nettoyage comprend un dispositif d'oscillation, en particulier un générateur d'ultrasons, avec lequel les poils de cathode (3 ; 23, 23a, 23b) peuvent être amenés à osciller constamment ou à intervalles de préférence périodiques.

3. Dispositif selon la revendication 1 ou 2, **caractérisé en ce que** les poils (3 ; 23, 23a, 23b) de la cathode en forme de brosse (2 ; 22) sont constitués par un matériau élastique, électriquement conducteur, résistant au liquide à traiter.

4. Dispositif selon la revendication 3, **caractérisé en ce qu'**il est prévu au moins un racleur (10) qui pénètre au moins en partie dans les extrémités libres des poils, et **en ce qu'**un mouvement relatif entre les poils (3 ; 23, 23a, 23b) et le racleur (10) est possible.

5. Dispositif selon l'une des revendications précédentes, **caractérisé en ce que** la cathode (22) est sous forme de brosse ronde avec des poils (23, 23a, 23b) qui se dressent sensiblement radialement depuis un axe (11) de la brosse.

6. Dispositif selon la revendication 5, **caractérisé en ce que** plusieurs cathodes (22) sont disposées axialement successivement le long de l'axe (11) de la brosse.

7. Dispositif selon l'une des revendications 5 ou 6, **caractérisé en ce qu'**il est prévu au moins un racleur (10) qui est disposé parallèlement à l'axe (11) de la brosse à une distance de celui-ci qui est inférieure à l'étendue radiale maximale des poils (23, 23a, 23b) depuis l'axe (11) de la brosse.

8. Dispositif selon l'une des revendications 5 à 7, **caractérisé en ce que** le racleur est sous forme d'anneau qui est enfilé sur la brosse ronde et qui peut être déplacé par rapport à la brosse le long de l'axe (11) de la brosse.

9. Dispositif selon l'une des revendications 5 à 8, **caractérisé en ce qu'**une ou plusieurs anodes (21) sont disposées dans la direction périphérique autour des poils (23, 23a, 23b) de la cathode en brosse ronde (22) qui se dressent radialement.

10. Dispositif selon la revendication 9, **caractérisé en ce que** la ou les anodes (21) est ou sont disposé(es) à une distance de l'axe (11) de la brosse qui est supérieure à l'étendue radiale maximale des poils (23, 23a, 23b) depuis l'axe (11) de la brosse, de sorte qu'il subsiste un espace annulaire (12) entre la cathode (22) et la ou les anodes (21).

11. Dispositif selon la revendication 10, **caractérisé en ce que** la ou les anodes (21) est ou sont constitué(es) par un fil enroulé en forme de ressort à boudin.

12. Dispositif selon la revendication 11, **caractérisé en ce que** le fil est enroulé sur une bobine cylindrique, de préférence poreuse, qui sert simultanément d'élément d'écartement par rapport à la cathode (22).

13. Dispositif selon l'une des revendication 1 à 4, **caractérisé en ce que** la cathode (2) est sous forme de brosse plate avec des poils (3) sensiblement parallèles entre eux qui s'étendent depuis une plaque plane et qui sont dirigés vers une ou plusieurs anodes (1) opposées à la cathode (2).

14. Dispositif selon les revendications 5 et 13, **caractérisé en ce que** le racleur (10) est sous forme de barre et peut être déplacé dans la direction longitudinale ou transversale par rapport à la surface de la brosse.

15. Dispositif selon l'une des revendications précédentes, **caractérisé en ce que** la source de tension (4) peut produire un courant continu, de préférence un courant continu pulsé.

16. Procédé de traitement de l'eau ou de solutions aqueuses contre les dépôts de calcaire par formation électrolytique de cristaux de carbonate de calcium (9) qui fixent ensuite, à titre de germes cristallins, le calcaire qui précipite lors de l'établissement de l'équilibre calcaire-acide carbonique, de sorte qu'un dépôt de calcaire dans des dispositifs d'installation en aval est largement évité, où la tension de l'électrolyse convient pour la décomposition électrolytique de l'eau, **caractérisé en ce que** l'on utilise pour l'électrolyse une cathode en forme de brosse (2 ; 22) avec des poils (3 ; 23, 23a, 23b) en matériau flexible dont la surface est déplacée constamment ou à intervalles dans le temps par un mouvement de torsion ou de flexion par rapport aux cristaux de calcaire (9) déposés sur la cathode (2 ; 22) en réalisant ainsi leur éclatement.

17. Procédé selon la revendication 16, **caractérisé en ce que** la déformation de la surface de la cathode est combinée à des forces d'accélération et/ou de ralentissement, de sorte qu'il se produit non seulement une séparation des cristaux de calcaire (9) de la surface de la cathode mais aussi une destruction d'agglomérats de cristaux éventuellement formés.

18. Procédé selon la revendication 16 ou 17, **caractérisé en ce que** le nombre et/ou la taille des cristaux de calcaire (9) formés sont amenés à varier par un réglage correspondant de la tension d'électrolyse, du courant d'électrolyse et/ou des intervalles dans le temps entre les mouvements de flexion ou de torsion au niveau de la cathode (2 ; 22).
